# EUROPEAN PATENT SPECIFICATION

(11) **EP 1 864 901 B1**
(45) Date of publication and mention of the grant of the patent: **18.05.2011**
(21) Application number: 07252329.3
(22) Date of filing: 08.06.2007
(51) Int. Cl.: B62K 11/10, B62K 25/28

(54) **Motorcycle**
Motorrad
Motocyclette

(30) Priority: 09.06.2006 JP 2006160436; 16.03.2007 JP 2007068936
(43) Date of publication of application: 12.12.2007
(73) Proprietor: Yamaha Hatsudoki Kabushiki Kaisha, Shizuoka-ken 438-8501 (JP)
(72) Inventor: Yamamoto, Yoshiaki, Iwata-shi, Shizuoka-ken 438-8501 (JP); Nishida, Kazuhiro, Iwata-shi, Shizuoka-ken 438-8501 (JP)
(74) Representative: Lamb, Martin John Carstairs

(56) References cited:
- EP-A- 1 389 579
- EP-A- 1 747 983
- EP-A2- 0 737 615
- FR-A1- 2 758 787
- JP-A- 9 323 689
- JP-A- 2003 237 674
- JP-A- 2006 046 326

## Description

### FIELD OF THE INVENTION

The present invention relates to a motorcycle comprising a rear cushion interposed between an engine unit and a body frame, which supports the engine unit to enable the same to swing vertically.

### BACKGROUND TO THE INVENTION

A scooter type motorcycle is constructed such that an engine body and a continuously variable transmission are made integral together, an engine unit with a rear wheel arranged at a rear end thereof is supported by a body frame to be able to swing vertically, and a rear cushion or suspension unit is interposed between the engine unit and the body frame.

With such a motorcycle arrangement, from the viewpoint of suppressing transmission of engine vibrations through the body frame to a rider as far as possible, it is generally that the engine unit is suspended from and supported by the body frame through a linkage. Such an arrangement is disclosed in prior art reference JP-A-9-11958.

The construction in which the engine unit is supported by the body frame through the linkage, since a center of swinging of the engine unit is disposed at a connection of the link and the engine unit, the link shifts as it swings relative to the body frame. Therefore, a problem arises that a delay in response is liable to be generated. That is, acceleration will be delayed when an opening operation of a throttle is performed, especially at the start and during acceleration, and so a feeling of indirectness or unresponsiveness at the start and during acceleration will be experienced by the rider.

Such shortness of a feeling or lack of directness or responsiveness is thought to be mainly attributable to the linkage in that torque from the engine unit is initially absorbed by the linkage. It is conceivable to heighten a feeling of directness by arranging a balancer mechanism, which prevents or suppresses generation itself of engine vibrations, on the engine unit and having the engine unit supported directly by the body frame.

However, the balancer mechanism involves a problem that engine vibrations due to a primary, inertial force can be suppressed, secondary vibrations or 0.5 degree vibrations cannot be suppressed or at least not sufficiently suppressed. In addition, when the balancer mechanism is designed in an attempt to suppress total vibrations, the balancer mechanism becomes complex and expensive, so that it is hard to adopt the mechanism.

On the other hand, engine vibrations are not only transmitted to a rider from the engine unit through the body frame but also transmitted to a rider from the rear cushion through the body frame. Also, since vertical vibrations input to the rear wheel from a road surface are transmitted to a rider from the engine unit through the rear cushion and the body frame, there is a need of improving such vibration transmission path in order to heighten rider comfort.

The invention has been thought of in view of the conventional situation described above and has its object to provide a motorcycle capable of heightening a feeling of directness and responsiveness at the start and during acceleration and suppressing transmission of engine vibrations and vibrations from a road surface to a rider.

JP2006046326 describes a motorcycle according to the preamble of claim 1, which comprises an engine having a balancer that inhibits vibrations caused by a crank mechanism. An instantaneous center of rotation of the engine is arranged in the region of a predetermined target position by adjusting an acceleration caused by a translational force generated by a primary inertial force of the crank mechanism and an inertial force of the balancer mechanism and an acceleration caused by a couple of forces generated by the primary inertial force of the crank mechanism and the inertial force of the balancer mechanism.

FR2758787 describes a scooter in which a rear fork is provided with a shock absorber attached to a rear tubular portion of the frame. The shock absorber attaches via an elastic bearing bush formed of rubber fixed on an inner surface of an eyelet of the shock absorber. An inner ring is subjugated by vulcanization onto the inner surface of the bush.

JP9323689 describes directly connecting an upper part of a rear cushion to a rear part of a frame with rubber members disposed therebetween.

EP1389579 describes a motorcycle having a rear cushion that engages with a rear swing arm upon which an engine and rear wheel are mounted, via an elastic material such as rubber.

EP0737615 describes a motorcycle in which right and left cushions are connected via first rubber bushing joints to a vehicle frame and rear cushion supporting portions on a transmission case body through second rubber bushing joints.

### SUMMARY OF THE INVENTION

Various aspects of the present invention are defined in the independent claim 1. Some preferred features are defined in the dependent claims.

According to a first aspect of the present invention, there is provided a motorcycle comprising:
a body frame;
an engine unit mounted on the body frame to swing vertically;
a rear wheel supported on the engine unit;
a rear cushion interposed between the engine unit and the body frame, wherein the cushion is pivotally coupled to the engine unit via a first connection and is pivotally coupled to the body frame via a second connection; and
a first elastic member provided on at least one of the first and second connections.

The engine unit comprises a balancer mechanism which includes a balancer shaft and adapted to suppress engine vibrations due to a primary, inertial force. The balancer mechanism advantageously may be adapted to establish forces which are equal and opposite to forces created during operation of the engine.

The engine unit further comprises a crank mechanism including a crank shaft, wherein
rotation of the crank shaft generates the primary, inertial force including a rotational component which is constant in magnitude and rotates, and a translational component which is fixed in direction and varies in magnitude with rotation of the crank shaft, and wherein
rotation of the balancer shaft generates an inertial force having a rotational component which balances that of the primary, inertial force, and a translational component which is substantially opposite to and is of the same magnitude than that of the primary, inertial force substantially at the location of the pivot axis.

The engine unit is supported on the body frame with a cylinder axis thereof inclined forward and the cushion is arranged with an axial direction thereof substantially in parallel to the cylinder axis.

The engine unit is directly mounted on the body frame. Accordingly, the engine unit is not mounted on the body frame via a separate linkage mechanism which is known in the art.

The engine unit is preferably supported through a second elastic member on the body frame.

The first elastic member may be interposed between the cushion and at least one of the engine unit and the body frame at the location of the connections.

A supported portion of the engine unit may be provided on a crank case, which supports the crank shaft of the engine unit. Alternatively, other portions of the engine unit, such as the cylinder body or the like may define a supported portion.

Preferably, the first elastic member is provided on only one of the first and second connections.

A needle bearing may be provided on the first connection.

Preferably, the first elastic member is provided on the second connection.

The first elastic member may include an outer cylinder fixed to an end of the cushion, an inner cylinder supported pivotally by a connecting pin provided on a mating member, and an elastic body fixedly interposed between the inner cylinder and the outer cylinder.

The cushion or suspension unit may be interposed only singly between the engine unit and the body frame.

A portion of the engine unit below the cylinder axis may be supported on the body frame and the cushion may be arranged above the engine unit.

Also described herein is a motorcycle comprising:
an engine unit;
a rear wheel supported by the engine unit;
a body frame which directly supports the engine unit to enable the engine unit to swing vertically; and
a balancer mechanism adapted to suppress inertial force related engine vibrations.

Described herein is a motorcycle comprising an engine unit, a rear wheel supported on the engine unit, a body frame, which supports the engine unit to enable the same to swing vertically, and a rear cushion interposed between the engine unit and the body frame, and
wherein a part of the engine unit is supported on the body frame to swing about an engine unit support portion of the body frame, and
a first elastic member is provided on at least one of a first connection, which connects the rear cushion and the engine unit to each other to enable the same to turn, and a second connection, which connects the rear cushion and the body frame to each other to enable the same to turn.

Here, "a part of the engine unit is supported on the body frame to swing about an engine unit support portion of the body frame" in the invention means that a part of the engine unit is supported on the body frame without a linkage, which is usually used in a unit swing type engine suspension of a motorcycle, therebetween. Accordingly, the engine unit swings without having a center of swinging thereof substantially shifting from the engine unit support portion of the body frame. In addition, "without --- substantially shifting" in this case means that like a case of being supported through an elastic bush or the like, a case of shifting corresponding to flexure of the elastic bush is included in "without --- substantially shifting".

Also, "a part --- is supported on the body frame" in the invention means that it includes the case where a cylinder block or a cylinder head or the like is supported, in addition to the case where a crank case is supported.

With the motorcycle according to the invention, since the engine unit is supported so as to swing about the engine unit support portion of the body frame, in other words, supported without a linkage therebetween, it is possible to heighten the responsiveness to a throttle opening operation, thus enabling improving a feeling of directness at the start and at the time of acceleration. That is, in the case where such linkage is interposed between the engine unit and the body frame, when a throttle opening operation is performed in order to initiate travel, a delay in response is experienced as engine torque is initially absorbed by the linkage in the course of transmission to the rear wheel, and then transmitted to the rear wheel. Consequently, a delay is experienced after the throttle opening operation, and so there is not obtained an adequate feeling of directness especially at the start. According to the invention, because of being supported so as to swing about the engine unit support portion without a linkage therebetween, it is possible to suppress the problem.

Also, according to the invention, since the first elastic member is provided on at least one of a first connection and a second connection it is possible to have the first elastic member absorbing engine vibrations transmitted to a rider via the rear cushion and the body frame from the engine unit and vibrations from a road surface, thus enabling or increasing rider comfort.

### BRIEF DESCRIPTION OF THE DRAWINGS

These and other aspects of the present invention will now be described below, by way of example only, with reference to the accompanying drawings, in which:
Fig. 1 is a side view showing a motorcycle according to an embodiment of the invention;
Fig. 2 is a side view showing a body frame of the motorcycle;
Fig. 3 is a plan view showing the body frame;
Fig. 4 is a side view showing an engine unit supported on the body frame to be able to swing vertically;
Fig. 5 is a side view showing a balancer mechanism of the engine unit;
Fig. 6 is a cross sectional view showing the balancer mechanism of the engine unit;
Fig. 7 is a cross sectional view taken along line VII-VII in Fig. 2 and showing a suspension of the engine unit;
Fig. 8 is a side view showing a rear cushion interposed between the engine unit and the body frame;
Fig. 9 is a side view showing the rear cushion;
Fig. 10 is a cross sectional view taken along line X-X in Fig. 9 and showing the rear cushion;
Fig. 11 is a cross sectional view taken along line XI-XI in Fig. 9 and showing a rear wheel support of a rear arm, to which the rear cushion is connected; and
Fig. 12 is a schematic view illustrating the construction of the balancer mechanism of the engine according to the embodiment.

### DETAILED DESCRIPTION OF THE DRAWINGS

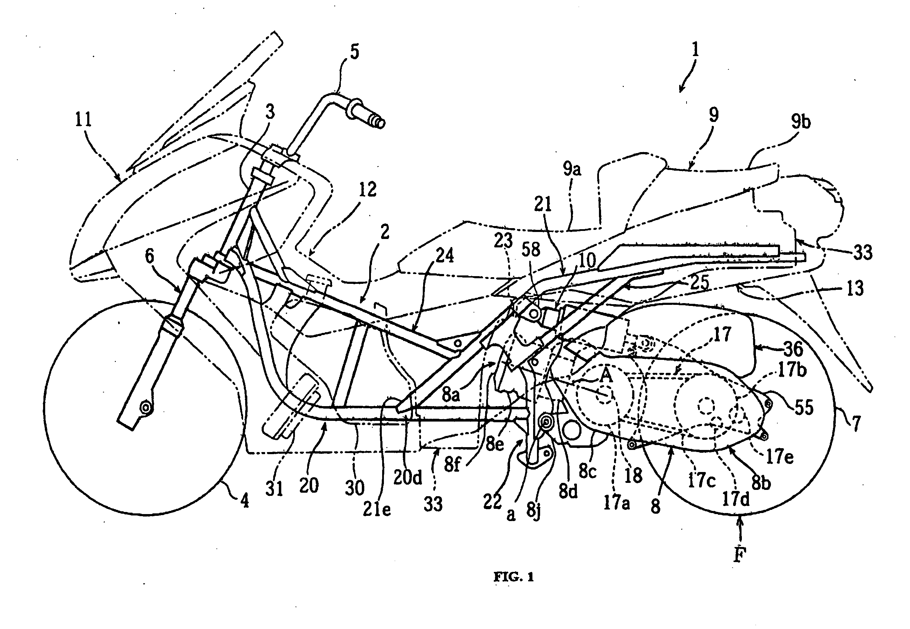

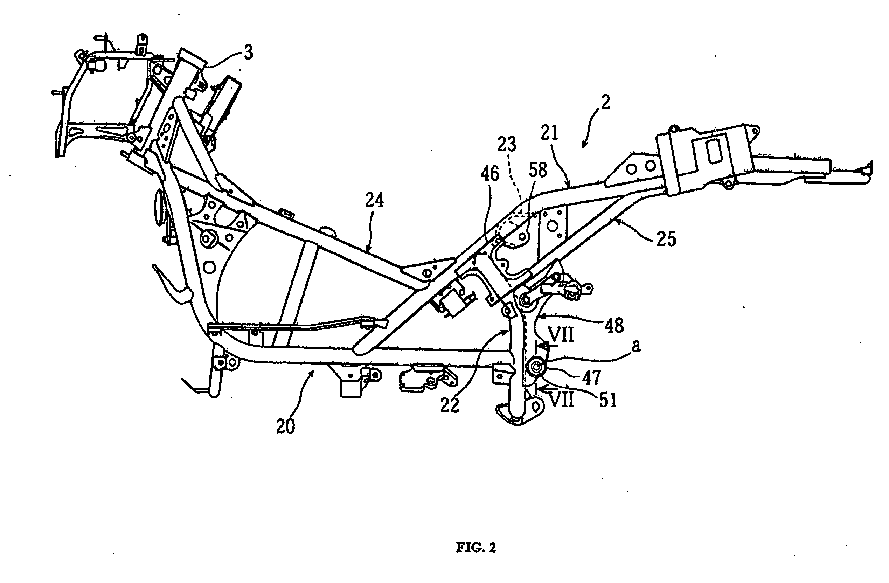

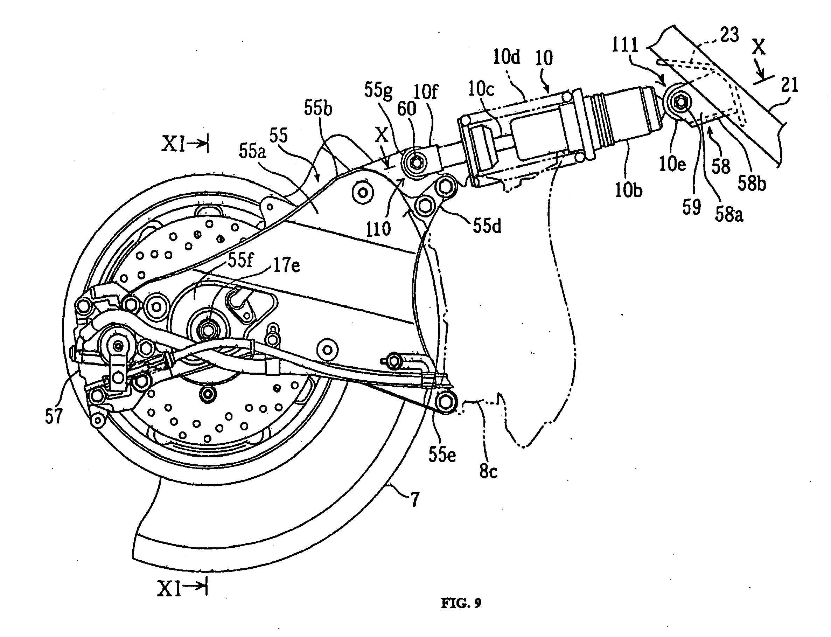

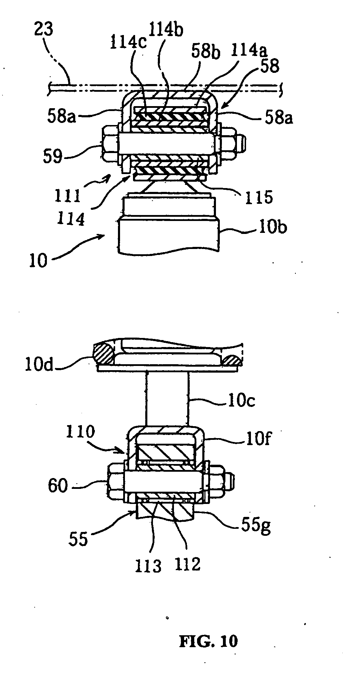

Figs. 1 to 11 are views illustrating a motorcycle according to an embodiment of the invention. In addition, front and rear, and left and right referred to in descriptions of the embodiment mean front and rear, and left and right as seen in a state of being seated on a seat of the motorcycle.

In the drawings, the reference numeral 1 denotes a scooter type motorcycle. The motorcycle 1 comprises a unit swing type engine unit 8, a rear wheel 7 supported on the engine unit 8, an underbone type body frame 2, which frame 2 supports the engine unit 8 to enable the engine unit 8 to swing vertically, and a rear cushion or suspension unit 10 (hereinafter referred to as cushion 10) interposed between the body frame 2 and the engine unit 8.

Also, the motorcycle 1 comprises a head pipe 3 arranged at a front end of the body frame 2, and a front fork 6 supported by the head pipe 3 to be steerable left and right. A front wheel 4 is mounted at a lower end of the front fork 6. A steering handle 5 is mounted at an upper end of the head pipe 3. A saddle-type seat 9 is arranged on the body frame 2 above the engine unit 8.

The seat 9 includes a main seat 9a supported to be able to turn forwardly upward about a front edge thereof, and a tandem seat 9b supported to be able to turn rearwardly upward about a rear end thereof.

The motorcycle 1 comprises a front cover 11, which covers a front side of the head pipe 3, a leg shield 12, which covers a rear side of the head pipe 3 and a front portion of a rider's leg, and a side cover 13 which covers a lower periphery of the seat 9. The whole body frame 2 is covered by the front cover 11, the leg shield 12, and the side cover 13.

The body frame 2 includes the head pipe 3, left and right downtubes 20, 20, left and right seat rails 21, 21 and left and right engine suspension frames 22, 22. The left and right downtubes 20, 20 diverge outside from the head pipe 3 in a vehicle width direction to extend rearward, and then extend rearward and substantially horizontally from lower ends thereof. The left and right seat rails 21, 21 extend rearward and obliquely upward from intermediate portions of the left and right downtubes 20 and extend rearward and substantially horizontally from lower ends thereof. The left and right engine suspension frames 22, 22 extend vertically from rear ends of the left and right downtubes 20 and the upper ends thereof are joined to the seat rails 21.

Also, the body frame 2 includes left and right upper tubes 24, 24, left and right seat stays 25, 25 and a cross member 23. The left and right upper tubes 24, 24 extend substantially straight and rearward from the head pipe 3 and have rear ends thereof joined to the seat rails 21. The left and right seat stays 25, 25 connect between the left and right engine suspension frames 22 and the seat rails 21. The cross member 23 connects between portions near to connections of the engine suspension frames 22 of the left and right seat rails 25 in the vehicle width direction. The cross member 23 is formed from a sheet metal and is substantially dog-leg shaped in cross section.

A fuel tank 30 is arranged at a front end in the body frame 2 and a radiator 31 is arranged below the fuel tank 30. Also, an upwardly opened storage box 33 is arranged behind the fuel tank 30. A front half of an opening of the storage box 33 is covered by the main seat 9a and a rear half of the opening is covered by the tandem seat 9b.

The engine unit 8 includes an engine body 8a and a transmission case 8b in which a V-belt continuously variable transmission 17 is accommodated, wherein the engine body 8a and transmission case 8b are joined integrally. An air cleaner 36 is fixed to an upper wall surface of the transmission case 8b.

The engine body 8a is a water-cooled type four-stroke single cylinder engine mounted with a cylinder axis A directed substantially horizontally and constructed such that a cylinder block 8d, a cylinder head 8e, and a head cover 8f are successively joined to a front mating surface of a crank case 8c, in which a crank mechanism 18 including a crank shaft 18b arranged substantially horizontally in the vehicle width direction is accommodated.

The V-belt continuously variable transmission 17 includes a drive pulley 17a arranged at a left end of the crank shaft 18, which projects into the transmission case 8b, a driven pulley 17b arranged at a rear end of the transmission case 8b, and a V-belt 17c wound round the drive pulley 17a and the driven pulley 17b.

Also, a main shaft 17d, to which rotation of the driven pulley 17b is transmitted, and a drive shaft 17e are arranged in the transmission case 8b, and the rear wheel 7 is mounted to the drive shaft 17e.

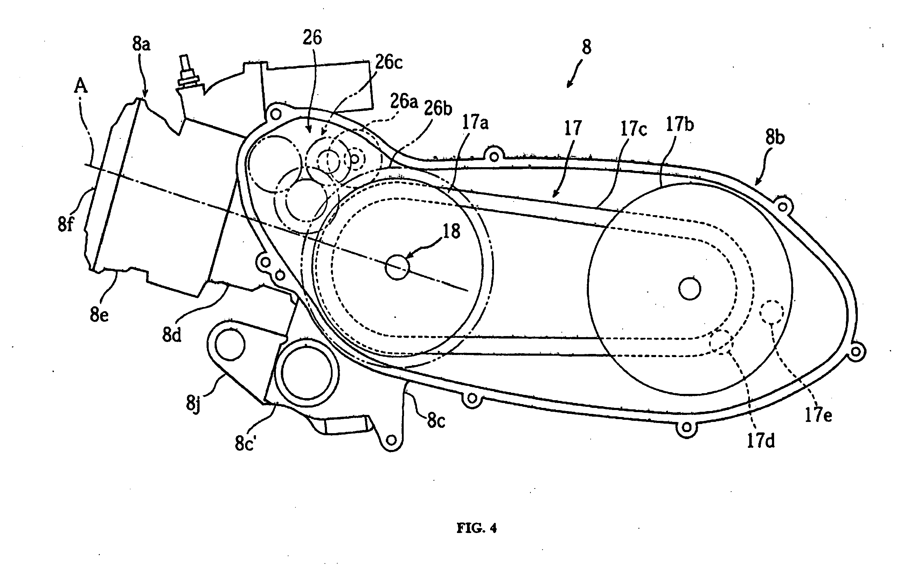

The V-belt continuously variable transmission 17 comprises a wound diameter varying mechanism 26 that uses a controller (not shown) to variably control a belt wound diameter of the drive pulley 17a between a low position and a top position on the basis of engine speed, vehicle speed, or the like with a rider's accelerator manipulated variable (see Fig. 4).

The wound diameter varying mechanism 26 includes a drive motor 26a, a reciprocating drive gear 26b, which axially moves a moving side sheave (not shown) of the drive pulley 17a to vary a wound diameter, and a reduction gear group or train 26c, which transmits rotation of the drive motor 26a to the reciprocating drive gear 26b.

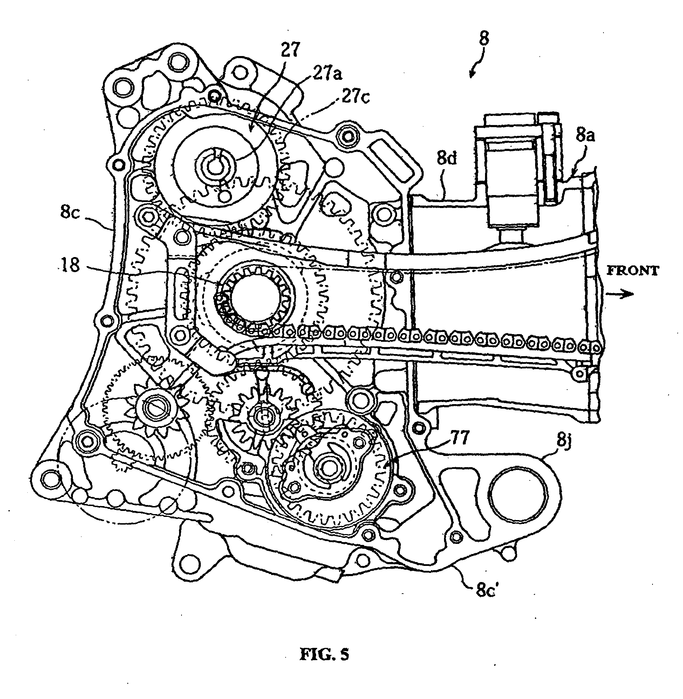

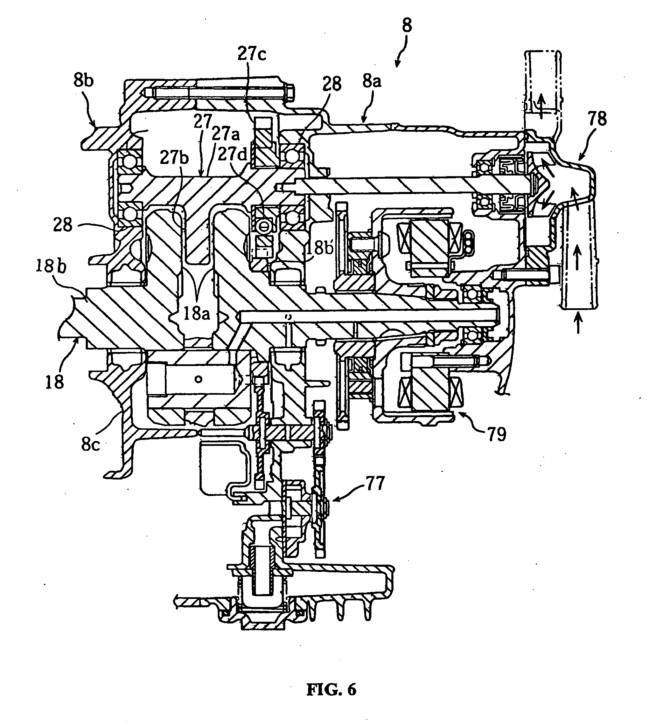

The engine unit 8 includes a balancer mechanism 27 (see Figs. 5 and 6), which includes a balancer shaft 27a and suppresses engine vibrations due to a primary, inertial force. The balancer mechanism 27 is constructed to rotate at the same rotating speed as that of the crank shaft 18b of the crank mechanism 18 and in a reverse direction thereto.

The balancer mechanism 27 includes a balancer shaft 27a arranged above the crank shaft 18b within the crank case 8c and arranged in parallel to the crank shaft 18b, and a balancer weight 27b formed integral with the balancer shaft 27a to extend perpendicularly to an axis thereof. The balancer weight 27b extends to be positioned between left and right counterweights 18a, 18a of the crank shaft 18b.

Left and right ends of the balancer shaft 27a are supported on the crank case 8c with bearings 28, 28 therebetween and a balancer gear 27c is joined to the balancer shaft 27a inwardly of the right bearing 28 with a damper member 27d therebetween. The balancer gear 27c meshes with a drive gear 18b' joined to the crank shaft 18b.

Here, a primary, inertial force generated by rotation of the crank shaft 18b of the crank mechanism 18 includes a rotational component, which is constant in magnitude and rotates, and a translational component, which is fixed in direction and varies in magnitude with rotation of the crank shaft 18b.

Also, the balancer mechanism 27 is constructed such that acceleration caused by a couple of forces, which a rotational component generated by a primary, inertial force of the crank shaft 18b balances an inertial force generated by rotation of the balancer shaft 27a to generate, and acceleration caused by a translational component of a primary, inertial force of the crank shaft 18b are substantially opposite to each other in direction and substantially the same in magnitude about a pivot shaft 51, which supports the engine unit 8.

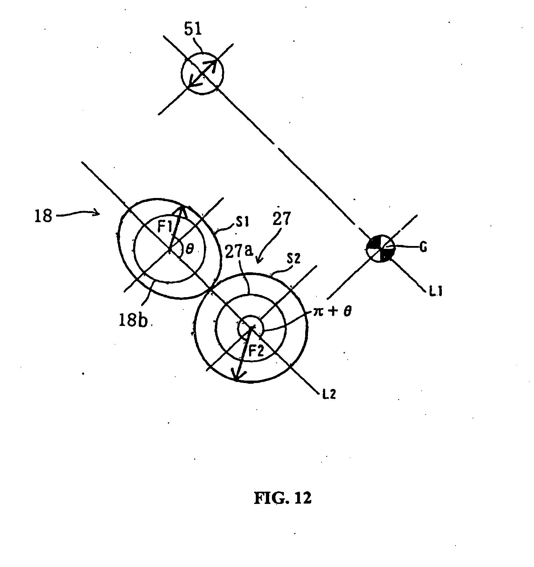

In order to make the both accelerations substantially opposite in direction and substantially the same in magnitude, it suffices to arrange an instantaneous center of rotation, at which vibrations caused by a primary, inertial force F1 of the crank mechanism 18 and an inertial force F2 of the balancer mechanism 27 are not generated, on the pivot shaft 51 as shown in Fig. 12. An explanation will be given below of an example of arranging the instantaneous center of rotation on the pivot shaft 51.

As shown in Fig. 12, a shape drawn by a locus of the primary, inertial force F1 of the crank mechanism 18 in vector representation over one cycle is a predetermined elliptical shape S1. On the other hand, the inertial force F2 of the balancer mechanism 27 draws a vector locus having a shape S2 of a perfect circle. The balancer shaft 27a and the crank shaft 18b are arranged so that a crank·balancer straight line L2, which connects between both shafts, is made substantially parallel to a center of gravity target position straight line L1, which connects between a center G of gravity of the engine unit 8 and the pivot shaft 51.

Also, a major axis of an ellipse of the primary, inertial force F1 of the crank mechanism 18 is arranged substantially in parallel to the crank-balancer straight line L2 and the inertial force F2 of the balancer mechanism 27 is constituted so that a magnitude of a diameter of the shape S2 of a perfect circle is made substantially the same as that of the major axis of the ellipse of the primary, inertial force of the crank mechanism.

An instantaneous center of rotation can be arranged in the vicinity of the pivot shaft 51 by controlling an elliptical shape of the primary, inertial force of the crank mechanism so that acceleration caused by a translational force and acceleration caused by a couple of forces are made substantially opposite in direction and substantially the same in magnitude in the vicinity of the pivot shaft 51.

An explanation has been given taking, as an example, the case where the balancer shaft 27a and the crank shaft 18b are arranged so that the crank·balancer straight line L2, which connects between the both shafts, is made substantially parallel to the center of gravity·target position straight line L1, which connects between the center G of gravity of the engine unit 8 and the pivot shaft 51. However, arrangement of the both shafts is not limited to this. This will be described below.

The elliptical shape of the primary, inertial force caused by the crank mechanism 18 is controlled by regulating at least the counterweights 18a of the crank mechanism 18. By regulating the counterweights 18a with respect to position and weight, it is possible to readily control the elliptical shape of the primary, inertial force caused by the crank mechanism 18 to the predetermined elliptical shape S1.

Also, by regulating the balancer weight 27b of the balancer mechanism 27 with respect to position and weight, it is possible to control the inertial force F2 of the balancer mechanism 27 so that a shape drawn by a locus in vector representation over one cycle becomes the shape S2 of a perfect circle having a predetermined magnitude.

In the manner described above, it is possible to arrange an instantaneous center of rotation in a target position, that is, in the vicinity of the pivot shaft 51 even in the case where the crank·balancer straight line L2 is not in parallel to the center of gravity·target position straight line L1.

In this manner, since it is possible to suppress vibrations in the vicinity of the pivot shaft 51, there is no need for a linkage that inhibits engine vibrations from being transmitted to the body frame, etc. Thereby, it is possible to reduce the number of parts and to minimise weight.

Reference numeral 77 (see Fig. 6) denotes an oil pump, which pressure feeds a lubricating oil at the bottom of the crank case 8c to respective lubricated parts of the engine body 8a, and the reference numeral 78 denotes a cooling water pump, which pressure feeds a cooling water to respective cooling water jackets of the engine body 8a. Also, the reference numeral 79 denotes an alternator.

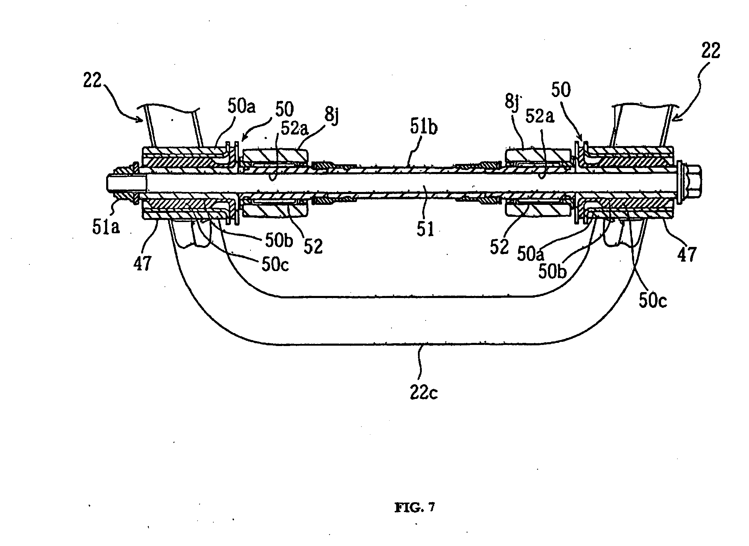

Left and right cylindrical-shaped pivot members (engine unit support portion) 47, 47 are arranged in the vicinity of the connections of the left and right engine suspension frames 22, 22 to the downtubes 20. The left and. right pivot members 47 are arranged with axes thereof directed in the vehicle width direction and elastic bushes (second elastic members) 50 (see Fig. 7) are inserted into the pivot members 47. The elastic bushes 50 are structured such that a rubber member 50c is interposed between an outer cylinder 50a and an inner cylinder 50b and the rubber member 50c is fixed to the outer cylinder 50a and the inner cylinder 50b.

A part of the engine unit 8 is supported so as to swing about the pivot members (engine unit support portion) 47 formed on the left and right engine suspension frames 22, 22 of the body frame 2. More specifically, the engine unit 8 swings vertically about an axis a (see Fig. 1) of the pivot shaft 51 inserted into the pivot members 47 and a portion thereof below the cylinder axis A is supported directly, that is, without a linkage therebetween. More specifically, the following construction is provided.

Lower ends of the left and right engine suspension frames 22 are connected integrally by a lower side portion 22c. The left and right cylindrical-shaped pivot members 47, 47 arranged with axes thereof directed in the vehicle width direction are fixed in the vicinity of the connections of the left and right engine suspension frames 22 to the downtubes 20. The elastic bushes 50, 50 described above are fixedly inserted into the left and right pivot members 47. The pivot shaft 51 is inserted into the left and right pivot members 47, 47, and the pivot shaft 51 is clamped by a nut 51a with the inner cylinders 50b of the elastic bushes 50, inner races 52a of bearings 52, and a collar 51b therebetween to be fixed in an axial direction, and supported elastically by the elastic bushes 50 in a direction perpendicular to an axis.

A pair of left and right suspension portions (supported portions) 8j, 8j are formed on a bottom wall front portion 8c' of the crank case 8c to project forward to be positioned below the cylinder block 8d. The left and right suspension portions 8j are arranged inwardly of the left and right pivot members 47 to be pivotally supported by the pivot shaft 51 with the bearings 52, 52 therebetween. Thereby, the engine unit 8 is suspended from and supported by the pivot shaft 51 with the bearings 52 therebetween to be able to swing vertically and supported directly by the left and right pivot members 47 with the elastic bushes 50 therebetween.

In this manner, in the case where the engine unit 8 is supported directly by the body frame 2, the engine unit 8 is supported with the elastic bushes 50 therebetween, so that it is possible to suppress transmission of engine vibrations and vibrations from a road surface to a rider through the body frame 2. Since the engine unit 8 is fixed in an axial direction of the pivot shaft 51, a feeling of stiffness in a transverse direction of a vehicle is not deteriorated.

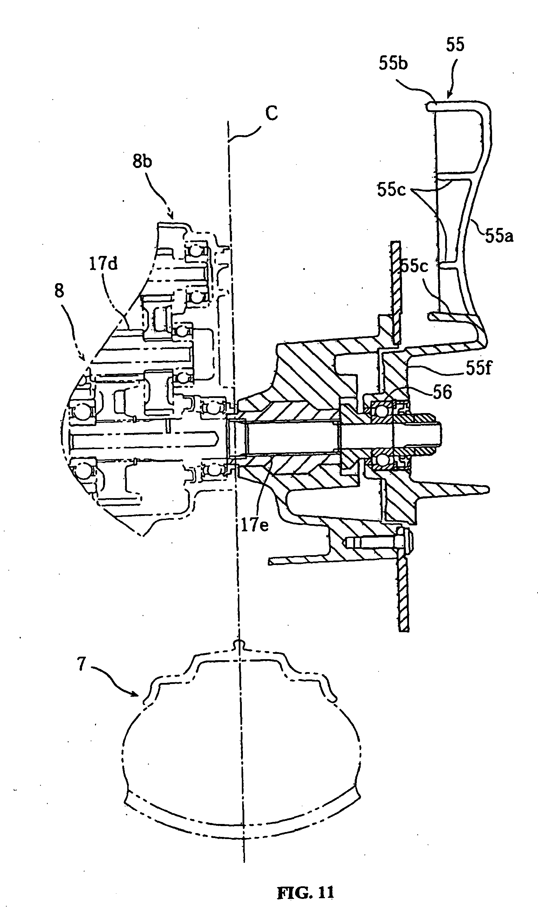

A rear arm 55, which may be die-cast is arranged on an opposite side of the rear wheel 7, which is positioned on a body center line C, to the transmission case 8b of the engine unit 8 in the vehicle width direction (see Fig. 11).

The rear arm 55 includes a substantially triangular-shaped arm body 55a formed so that a vertical dimension thereof decreases toward the rear from the front as viewed from laterally, a flange portion 55b formed inwardly bendingly at an outer peripheral edge of the arm body 55a, and a lattice-shaped rib 55c connecting between the flange portion 55b and the arm body 55a.

A front, upper end 55d and a front, lower end 55e of the arm body 55a, respectively, are bolted and fixed to the crank case 8c and a rear end 55f supports the drive shaft 17e of the rear wheel 7 with a bearing 56 therebetween. The drive shaft 17e is supported at both ends thereof by the transmission case 8b and the rear arm 55. Also, a brake caliper 57 is mounted on a side of the rear end 55f of the rear arm 55 rearwardly of the drive shaft 17e.

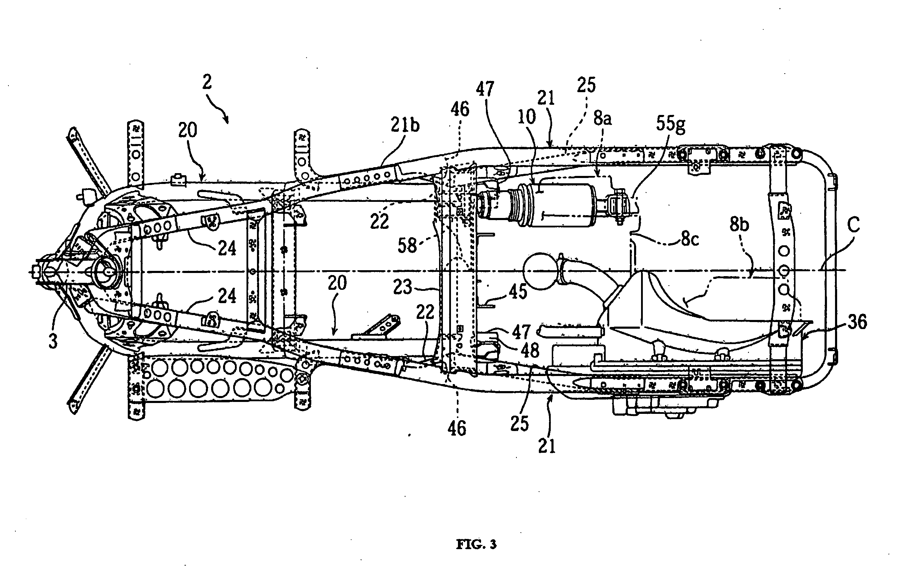

The rear cushion 10 is interposed between the rear arm 55 and the cross member 23 to be arranged above the engine unit 8 and substantially in parallel to the cylinder axis A of the engine unit 8, that is, substantially horizontally as viewed from laterally, and arranged on one side of the body center line C in the vehicle width direction and singly in a position offset rightward in the case of the embodiment as viewed from above (see Figs. 1 and 3).

The rear cushion 10 includes a cylinder 10b, a piston rod 10c connected to a piston (not shown) inserted and arranged slidably in the cylinder 10b, and a coil spring 10d arranged between the piston rod 10c and the cylinder 10b to bias the both 10b, 10d in a direction of extension.

The rear cushion 10 and the rear arm 55 fixed to the engine unit 8 are pivotally connected to each other through a first connection 110 and the rear cushion 10 and the cross member 23 of the body frame 2 are pivotally connected to each other through a second connection 111.

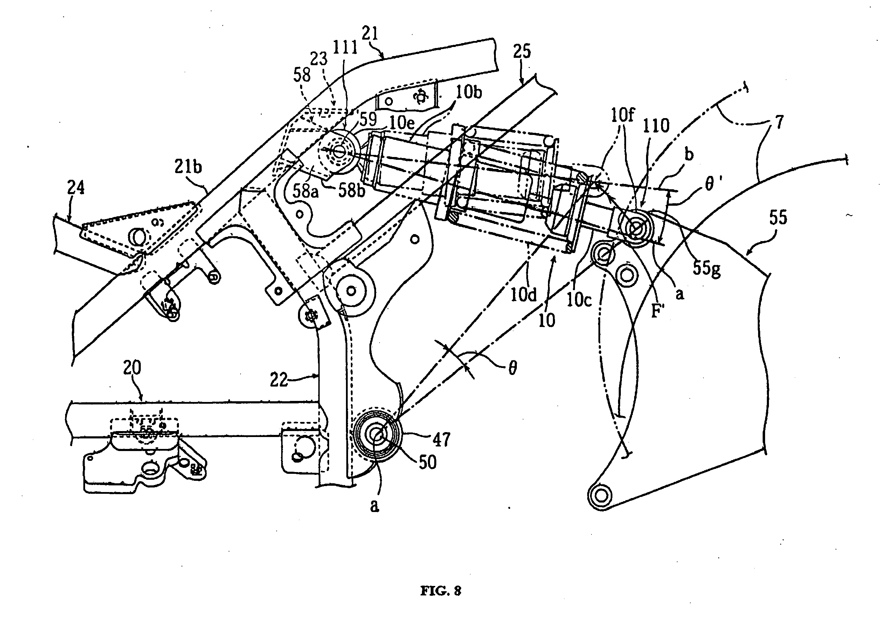

The rear cushion 10 converts an external force F acting substantially vertically on the rear wheel 7 into a substantially longitudinal force F to absorb the same as shown in Figs. 1 and 8, and the rear cushion 10 turns an angle θ' from at the time of maximum extension a to at the time of maximum contraction b upon a maximum stroke of the rear wheel 7.

The first connection 110 is connected to the rear arm 55 with a needle bearing 113 therebetween, the second connection 111 is connected to the cross member 23 with an elastic member (first elastic member) 114 therebetween, and the detailed construction is as follows.

The first connection 110 is structured such that a C-shaped bracket 10f fixed to a rear end surface of the piston rod 10c and a boss portion 55g formed protrusively forwardly above the front, upper end 55d of the rear arm 55 are pivotally connected to each other by a connecting bolt 60 with a needle bearing 113 therebetween.

A cylindrical-shaped collar 112 having a slightly longer, axial length than that of the boss portion 55g is inserted into the boss portion 55g. The needle bearing 113 is interposed between the collar 112 and the boss portion 55g and the collar 112 is fixed to the bracket 10f by clamping the connecting bolt 60. Thereby, the piston rod 10c and the rear arm 55 are pivotally connected to each other with the bearing 113 therebetween.

The second connection 111 is structured such that the cylinder 10b and a connecting bracket 58 fixed to the cross member 23 are pivotally connected to each other by a connecting bolt 59 with the elastic member 114 therebetween.

The connecting bracket 58 is substantially C-shaped to include left and right side wall portions 58a, 58a and a bottom wall portion 58b for connection of ends of the left and right side wall portions 58a, and fixed to a right end of the cross member 23 in the vehicle width direction.

The elastic member 114 includes an outer cylinder 114a fixed to a front end of the cylinder 10b, an inner cylinder 114b inserted into the outer cylinder 114a to be coaxial therewith, and an elastic body 114c made of rubber or the like and fixedly interposed between the inner cylinder 114b and the outer cylinder 114a.

A cylindrical-shaped collar 115 having a slightly longer, axial length than that of the inner cylinder 114b is inserted into the inner cylinder 114b to enable relative rotation and a lubricant (not shown) is coated between the collar 115 and the inner cylinder 114b. The collar 115 is fixed to the left and right side wall portions 58a of the connecting bracket 58 by clamping the connecting bolt 59. Thereby, the cylinder 10b and the cross member 23 are pivotally connected to each other with the elastic member 114 therebetween.

According to the embodiment, since a part of the engine unit 8 is supported by the body frame to swing about the axis a of the pivot shaft 51 of the pivot members 47, which constitutes an engine unit support portion of the body frame, in other words, supported without a linkage, which is usually used in a unit swing type engine suspension, the engine unit 8 can be swung without having its center of swinging substantially shifting from the axis a. Therefore, it is possible to heighten the responsiveness to a throttle opening operation as compared with an arrangement with a linkage therebetween, thus enabling improving a feeling of directness at the start and at the time of acceleration. That is, in the case where such linkage is interposed between an engine unit and a body frame, when a throttle opening operation is performed in order to begin traveling from a state of stoppage, there is felt a delay in response such that engine torque is first once absorbed by the linkage in the course of transmission to a rear wheel and then transmitted to the rear wheel. Consequently, a time lag is felt between opening the throttle and the vehicle beginning forward travel and so there is not obtained an adequate feeling of directness or responsiveness especially at the start. According to the embodiment, since the engine unit 8 is supported directly by the body frame 2 without any linkage therebetween, the problem described above can be suppressed.

Also, since the engine unit 8 is supported by the pivot members 47 with the elastic bushes 50 therebetween, it is possible to suppress transmission of engine vibrations to a side of a vehicle body. In addition, even in the case where the elastic bushes 50 are interposed, a center of swinging of the engine unit 8 is not substantially shifted. That is, negligible or minor shifting of the center of swinging may occur due to flexure of the elastic bushes 50 but such movement in this order has little influence on that delay in response, which is problematically discussed in the invention.

Furthermore, according to the embodiment, since the balancer mechanism 27 is provided on the engine unit 8, it is possible to suppress vibrations themselves caused by the engine unit 8, thus enabling suppressing transmission of engine vibrations to a rider through the body frame 2 while the engine unit 8 is supported directly by the body frame 2.

More specifically, since the balancer mechanism 27 is constructed such that acceleration caused by a couple of forces, which a rotational component generated by a primary, inertial force of the crank shaft 18b balances an inertial force generated by rotation of the balancer shaft 27a to generate, and acceleration caused by a translational component of a primary, inertial force of the crank shaft 18b are substantially opposite in direction and substantially the same in magnitude in the vicinity of the axis a of the pivot shaft 51 being that portion of the engine unit 8, which is supported on the body frame, it is possible to suppress transmission of engine vibrations to a rider.

Also, since the elastic member 114 is provided on the second connection 111, which connects between the rear cushion 10 and the cross member 23 of the body frame 2, the elastic member 114 can absorb engine vibrations transmitted to a rider via the body frame 2 from the rear cushion 10 and vertical vibrations from a road surface, thus improving rider comfort.

Also, according to the embodiment, since the elastic member 114 is provided on the second connection 111, which connects between the rear cushion 10 and the cross member 23, it is also possible to suppress transmission of vibrations caused by fluttering of the rear cushion 10 itself, or the like. That is, if an elastic member were provided on the connection of the rear cushion 10 to the rear arm 55 and the needle bearing 113 were provided on the connection thereof to the cross member 23, it could not suppress transmission of vibrations caused by the rear cushion 10 itself to a side of a vehicle body. Also, since the elastic member 114 is provided only on one of the connections, it is possible to suppress transmission of the engine vibrations to a rider without impairing the damping function of the rear cushion 10 itself. That is, the elastic member 114 has the function of suppressing transmission of vibrations but has little damping function, there is a fear of adverse influences on the damping function of the rear cushion 10 when the elastic members 114 are arranged on the both connections 110, 111.

According to the embodiment, since the elastic member 114 includes the outer cylinder 114a fixed to the cylinder 10b of the rear cushion 10, the inner cylinder 114b arranged to be coaxial with the outer cylinder 114a and to be able to rotate relative to the collar 115, and the elastic body 114c made of rubber or the like and fixedly interposed between the inner cylinder 114b and the outer cylinder 114a, transmission of vibrations from the rear cushion 10 to a side of a vehicle body can be absorbed by the elastic body 114c and the rear cushion 10 and the side of the vehicle body can turn relatively, so that the connection of the rear cushion 10 to the side of the vehicle body provides no resistance to vertical sliding of the engine unit.

Since the suspension portions 8j being supported portions of the engine unit 8 are provided on a portion of the crank case which is positioned below the cylinder axis A, it is possible to restrict a swinging angle of the engine unit 8 to improve rider comfort as compared with the case where the suspension portions are provided on an upper side, and to provide sufficient space above the engine unit 8 to accommodate the rear cushion 10.

Also, since the rear cushion 10 is arranged singly on an opposite side to the transmission case 8b, it is easy in this respect to provide sufficient space to accommodate the rear cushion 10. Furthermore, the rear cushion 10 is arranged substantially parallel to the cylinder axis A which is arranged substantially horizontally. In this respect it is possible to provide sufficient space to accommodate the rear cushion 10.

### Description of Reference Numerals and Signs

1: motorcycle
2: body frame
7: rear wheel
8: engine unit
8c: crank case
8j: suspension portion (a part of engine unit)
10: rear cushion
18: crank mechanism
18b: crank shaft
27: balancer mechanism
27a: balancer shaft
47: pivot member (engine unit support portion)
51: pivot shaft (portion supported on body frame)
110: first connection
111: second connection
113: needle bearing
114: elastic member (first elastic member)
114a: outer cylinder
114b: inner cylinder
114c: elastic body
A: cylinder axis
F1: primary, inertial force by crank mechanism
F2: inertial force by balancer shaft

## Claims

1. A motorcycle (1) comprising:
a body frame (2);
an engine unit (8) directly mounted on the body frame (2) to swing vertically, wherein the engine unit comprises a crank mechanism (18) including a crank shaft (18b), and further comprises a balancer mechanism (27) which includes a balancer shaft (27a) and is adapted to suppress engine vibrations due to a primary, inertial force (F1);
a rear wheel (7) supported on the engine unit (8);
a rear cushion (10) interposed between the engine unit (8) and the body frame (2), wherein the cushion (10) is pivotally coupled to the engine unit (8) via a first connection (110) and is pivotally coupled to the body frame (2) via a second connection (111);
the crank shaft is arranged such that rotation of the crank shaft (18b) generates the primary, inertial force (F1) including a rotational component which is constant in magnitude and rotates, and a translational component which is fixed in direction and varies in magnitude with rotation of the crank shaft (18b), wherein
the balancer shaft is arranged such that rotation of the balancer shaft (27a) generates an inertial force (F2) having a rotational component which balances that of the primary, inertial force, and a translational component which is substantially opposite to and is of the same magnitude than that of the primary, inertial force substantially at the location of a pivot axis of the engine unit; and wherein
the engine unit (8) is supported on the body frame (2) with a cylinder axis (A) thereof inclined forward; **characterized in that**
a first elastic member (114) is provided on at least one of the first and second connections (110, 111) ), and
the cushion (10) is arranged with an axial direction thereof substantially in parallel to the cylinder axis (A).

2. The motorcycle (1) according to claim 1, wherein the engine unit (8) is supported through a second elastic member (50) on the body frame (2).

3. The motorcycle (1) according to any preceding claim, wherein the first elastic member (114) is interposed between the cushion (10) and at least one of the engine unit (8) and the body frame (2) at the location of the connections (110, 111).

4. The motorcycle (1) according to any preceding claim, wherein a supported portion of the engine unit (8) is provided on a crank case (8c), which supports the crank shaft (8b) of the engine unit (8).

5. The motorcycle (1) according to any preceding claim, wherein the first elastic member (114) is provided on only one of the first and second connections (110, 111).

6. The motorcycle (1) according to any preceding claim, wherein a needle bearing (113) is provided on the first connection (110).

7. The motorcycle (1) according to any preceding claim, wherein the first elastic member (114) is provided on the second connection (111).

8. The motorcycle (1) according to any preceding claim, wherein the first elastic member (114) includes an outer cylinder (114a) fixed to an end of the cushion (10), an inner cylinder (114b) supported pivotally by a connecting pin (59) provided on a mating member, and an elastic body (114c) fixedly interposed between the inner cylinder (114b) and the outer cylinder (114a).

9. The motorcycle (1) according to any preceding claim, wherein only a single cushion (10) is interposed between the engine unit (8) and the body frame (2).

10. The motorcycle (1) according to any preceding claim, wherein a portion of the engine unit (8) below the cylinder axis (A) is supported on the body frame (2) and the cushion (10) is arranged above the engine unit (8).

11. A motorcycle (1) according to any preceding claim, wherein the body frame (2) supports the engine unit (8) to enable the engine unit to swing vertically, a part of the engine unit (8) being supported on the body frame (2) to swing about an engine unit support portion (47) of the body frame (2); and
wherein the first connection (110) connects the rear cushion (10) and the engine unit (8) to each other so as to be relatively turnable, and the second connection (111) connects the rear cushion (10) and the body frame (2) to each other so as to be relatively turnable.

12. The motorcycle (1) according to claim 11, wherein the engine unit (2) comprises the balancer mechanism (27) which includes the balancer shaft (27a) and is adapted to suppress engine vibrations due to the primary, inertial force.

13. The motorcycle (1) according to claim 12, wherein the engine unit (8) comprises the crank mechanism (18) including the crank shaft (18b),
the crank shaft is arranged such that the primary, inertial force generated by rotation of the crank shaft (18b) includes the rotational component, which is constant in magnitude and rotates, and the translational component, which is fixed in direction and varies in magnitude with rotation of the crank shaft (18b),
the engine unit is configured such that acceleration caused by a couple of forces, the couple of forces being a couple in which the rotational component of the primary, inertial force generated by rotation of the crank shaft (18b) balances the inertial force generated by rotation of the balancer shaft (27a), and acceleration caused by the translational component of the primary, inertial force of the crank shaft (18b) are substantially opposite to each other in direction and substantially the same in magnitude at that portion of the engine unit (8), which is supported on the body frame (2).

## Patentansprüche

1. Motorrad (1), das Folgendes umfasst:
einen Aufbaurahmen (2),
eine Motoreinheit (8), die unmittelbar an dem Aufbaurahmen (2) angebracht ist, um in Vertikalrichtung zu schwingen, wobei die Motoreinheit einen Kurbelmechanismus (18) umfasst, der eine Kurbelwelle (18b) einschließt, und ferner einen Ausgleichsmechanismus (27) umfasst, der eine Ausgleichswelle (27a) einschließt und dafür eingerichtet ist, Motorvibrationen auf Grund einer primären Trägheitskraft (F1) zu unterdrücken,
ein Hinterrad (7), das an der Motoreinheit (8) getragen wird,
einen hinteren Dämpfer (10), der zwischen der Motoreinheit (8) und dem Aufbaurahmen (2) eingefügt ist, wobei der Dämpfer (10) über eine erste Verbindung (110) schwenkbar an die Motoreinheit (8) gekoppelt ist und über eine zweite Verbindung (111) schwenkbar an den Aufbaurahmen (2) gekoppelt ist,
wobei die Kurbelwelle derart angeordnet ist, dass eine Drehung der Kurbelwelle (18b) die primäre Trägheitskraft (F1) erzeugt, die eine Rotationskomponente, die in der Größe konstant ist und sich dreht, und eine Translationskomponente, die in der Richtung feststehend ist und sich mit der Drehung der Kurbelwelle (18b) in der Größe ändert, einschließt, wobei
die Ausgleichswelle derart angeordnet ist, dass eine Drehung der Ausgleichswelle (27a) im Wesentlichen an der Position einer Schwenkachse der Motoreinheit eine Trägheitskraft (F2) erzeugt, die eine Rotationskomponente, die diejenige der primären Trägheitskraft ausgleicht, und eine Translationskomponente, die im Wesentlichen entgegengesetzt zu derjenigen der primären Trägheitskraft ist und die gleiche Größe hat wie dieselbe, hat, und wobei
die Motoreinheit (8) so an dem Aufbaurahmen (2) getragen wird, dass eine Zylinderachse (A) derselben nach vorn geneigt ist, **dadurch gekennzeichnet, dass**
ein erstes elastisches Element (114) an wenigstens der ersten und/oder der zweiten Verbindung (110, 111) bereitgestellt wird und
der Dämpfer (10) so angeordnet ist, dass eine Axialrichtung desselben im Wesentlichen parallel zu der Zylinderachse (A) ist.

2. Motorrad (1) nach Anspruch 1, wobei die Motoreinheit (8) durch ein zweites elastisches Element (50) an dem Aufbaurahmen (2) getragen wird.

3. Motorrad (1) nach einem der vorhergehenden Ansprüche, wobei das erste elastische Element (114) an der Position der Verbindungen (110, 111) zwischen dem Dämpfer (10) und wenigstens der Motoreinheit (8) und/oder dem Aufbaurahmen (2) eingefügt ist.

4. Motorrad (1) nach einem der vorhergehenden Ansprüche, wobei ein getragener Abschnitt der Motoreinheit (8) an einem Kurbelgehäuse (8c) bereitgestellt wird, das die Kurbelwelle (8b) der Motoreinheit (8) trägt.

5. Motorrad (1) nach einem der vorhergehenden Ansprüche, wobei das erste elastische Element (114) nur an einer von der ersten und der zweiten Verbindung (110, 111) bereitgestellt wird.

6. Motorrad (1) nach einem der vorhergehenden Ansprüche, wobei ein Nadellager (113) an der ersten Verbindung (110) bereitgestellt wird.

7. Motorrad (1) nach einem der vorhergehenden Ansprüche, wobei das erste elastische Element (114) an der zweiten Verbindung (111) bereitgestellt wird.

8. Motorrad (1) nach einem der vorhergehenden Ansprüche, wobei das erste elastische Element (114) einen äußeren Zylinder (114a), der an einem Ende des Dämpfers (10) befestigt ist, einen inneren Zylinder (114b), der durch einen an einem Passelement bereitgestellten Verbindungszapfen (59) schwenkbar getragen wird, und einen elastischen Korpus (114c), der unbeweglich zwischen dem inneren Zylinder (114b) und dem äußeren Zylinder (114a) eingefügt ist, einschließt.

9. Motorrad (1) nach einem der vorhergehenden Ansprüche, wobei nur ein einziger Dämpfer (10) zwischen der Motoreinheit (8) und dem Aufbaurahmen (2) eingefügt ist.

10. Motorrad (1) nach einem der vorhergehenden Ansprüche, wobei ein Abschnitt der Motoreinheit (8) unterhalb der Zylinderachse (A) an dem Aufbaurahmen (2) getragen wird und der Dämpfer (10) oberhalb der Motoreinheit (8) angeordnet ist.

11. Motorrad (1) nach einem der vorhergehenden Ansprüche, wobei der Aufbaurahmen (2) die Motoreinheit (8) trägt, um zu ermöglichen, dass die Motoreinheit in Vertikalrichtung schwingt, wobei ein Teil der Motoreinheit (8) an dem Aufbaurahmen (2) getragen wird, um um einen Motoreinheit-Tragabschnitt (47) des Aufbaurahmens (2) zu schwingen, und
wobei die erste Verbindung (110) den hinteren Dämpfer (10) und die Motoreinheit (8) so miteinander verbindet, dass sie verhältnismäßig gedreht werden können, und die zweite Verbindung (111) den hinteren Dämpfer (10) und den Aufbaurahmen (2) so miteinander verbindet, dass sie verhältnismäßig gedreht werden können.

12. Motorrad (1) nach Anspruch 11, wobei die Motoreinheit (8) den Ausgleichsmechanismus (27) umfasst, der die Ausgleichswelle (27a) umfasst und dafür eingerichtet ist, Motorvibrationen auf Grund der primären Trägheitskraft zu unterdrücken.

13. Motorrad (1) nach Anspruch 12, wobei die Motoreinheit (8) den Kurbelmechanismus (18) umfasst, der die Kurbelwelle (18b) einschließt,
die Kurbelwelle derart angeordnet ist, dass die durch die Drehung der Kurbelwelle (18b) erzeugte primäre Trägheitskraft eine Rotationskomponente, die in der Größe konstant ist und sich dreht, und eine Translationskomponente, die in der Richtung feststehend ist und sich mit der Drehung der Kurbelwelle (18b) in der Größe ändert, einschließt,
die Motoreinheit derart konfiguriert ist, dass eine durch ein Kräftepaar verursachte Beschleunigung, wobei das Kräftepaar ein Paar ist, wobei die Rotationskomponente der durch die Drehung der Kurbelwelle (18b) erzeugten primären Trägheitskraft die durch die Drehung der Ausgleichswelle (27a) erzeugte Trägheitskraft ausgleicht, und eine durch die Translationskomponente der primären Trägheitskraft der Kurbelwelle (18b) erzeugte Beschleunigung an demjenigen Abschnitt der Motoreinheit (8), der an dem Aufbaurahmen (2) getragen wird, im Wesentlichen in der Richtung entgegengesetzt zueinander sind und im Wesentlichen in der Größe gleich sind.

## Revendications

1. Motocycle (1), comprenant :
un châssis de carrosserie (2) ;
une unité de moteur (8), montée directement sur le châssis de carrosserie (2) en vue d'un pivotement vertical, l'unité de moteur comprenant un mécanisme de vilebrequin (18) englobant un arbre de vilebrequin (18b), et comprenant en outre un mécanisme d'équilibrage (27), englobant un arbre d'équilibrage (27a), et adapté pour supprimer les vibrations du moteur dues à une force d'inertie primaire (F1) ;
une roue arrière (7), supportée sur l'unité de moteur (8) ;
un coussin arrière (10) agencé entre l'unité de moteur (8) et le châssis de carrosserie (2), le coussin (10) étant accouplé de manière pivotante à l'unité de moteur (8) par une première connexion (110) et étant accouplé de manière pivotante au châssis de carrosserie (2) par une deuxième connexion (111) ;
l'arbre de vilebrequin étant agencé de sorte que la rotation de l'arbre de vilebrequin (18b) produit la force d'inertie primaire (F1), englobant une composante de rotation à valeur constante et en rotation, et une composante de translation, à direction fixe et à valeur variable en fonction de la rotation de l'arbre de vilebrequin (18b) ; dans lequel
l'arbre d'équilibrage est agencé de sorte que la rotation de l'arbre d'équilibrage (27a) produit une force d'inertie (F2), comportant une composante de rotation équilibrant celle de la force d'inertie primaire, et une composante de translation, pratiquement opposée à celle de la force d'inertie primaire et ayant la même valeur que celle-ci, pratiquement au niveau de l'emplacement d'un axe de pivotement de l'unité de moteur ; et dans lequel
l'unité de moteur (8) est supportée sur le châssis de carrosserie (2) par un axe de cylindre de celle-ci (A), incliné vers l'avant, **caractérisé en ce que**
un premier élément élastique (114) est agencé sur au moins une des premières et deuxièmes connexions (110, 111) ; et
le coussin (10) est agencé de sorte que sa direction axiale est pratiquement parallèle à l'axe du cylindre (A).

2. Motocycle (1) selon la revendication 1, dans lequel l'unité de moteur (8) est supportée par un deuxième élément élastique (50) sur le châssis de carrosserie (2).

3. Motocycle (1) selon l'une quelconque des revendications précédentes, dans lequel le premier élément élastique (114) est agencé entre le coussin (10) et au moins l'unité de moteur (8) ou le châssis de carrosserie (2) au niveau de l'emplacement des connexions (110, 111).

4. Motocycle (1) selon l'une quelconque des revendications précédentes, dans lequel une partie supportée de l'unité de moteur (8) est agencée sur un carter du moteur (8c), supportant l'arbre de vilebrequin (8b) de l'unité de moteur (8).

5. Motocycle (1) selon l'une quelconque des revendications précédentes, dans lequel le premier élément élastique (114) est agencé sur une seule des premières et deuxièmes connexions (110, 111).

6. Motocycle (1) selon l'une quelconque des revendications précédentes, dans lequel un roulement à aiguilles (113) est agencé sur la première connexion (110).

7. Motocycle (1) selon l'une quelconque des revendications précédentes, dans lequel le premier élément élastique (114) est agencé sur la deuxième connexion (111).

8. Motocycle (1) selon l'une quelconque des revendications précédentes, dans lequel le premier élément élastique (114) englobe un cylindre externe (114a) fixé sur une extrémité du coussin (10), un cylindre interne (114b) supporté de manière pivotante par une broche de connexion (59), agencé sur un élément d'accouplement, et un corps élastique (114c) agencé de manière fixe entre le cylindre interne (114b) et le cylindre externe (114a).

9. Motocycle (1) selon l'une quelconque des revendications précédentes, dans lequel un seul coussin (10) est agencé entre l'unité de moteur (8) et le châssis de carrosserie (2).

10. Motocycle (1) selon l'une quelconque des revendications précédentes, dans lequel une partie de l'unité de moteur (8) au-dessous de l'axe du cylindre (A) est supportée sur le châssis de carrosserie (2), le coussin (10) étant agencé au-dessus de l'unité de moteur (8).

11. Motocycle (1) selon l'une quelconque des revendications précédentes, dans lequel le châssis de carrosserie (2) supporte l'unité de moteur (8), pour permettre un pivotement vertical de l'unité de moteur, une partie de l'unité de moteur (8) étant supportée sur le châssis de carrosserie (2), pour permettre un pivotement autour d'une partie de support de l'unité de moteur (47) du châssis de carrosserie (2) ; et
la première connexion (110) assurant la connexion du coussin arrière (10) et de l'unité de moteur (8), de sorte à permettre une rotation relative, la deuxième connexion (111) assurant la connexion du coussin arrière (10) et du châssis de carrosserie (2), de sorte à permettre une rotation relative.

12. Motocycle (1) selon la revendication 11, dans lequel l'unité de moteur (8) comprend le mécanisme d'équilibrage (27), englobant l'arbre d'équilibrage (27a), et adapté pour supprimer les vibrations du moteur dues à une force d'inertie primaire.

13. Motocycle (1) selon la revendication 12, dans lequel l'unité de moteur (8) comprend un mécanisme de vilebrequin (18), englobant un arbre de vilebrequin (18b) ;
l'arbre de vilebrequin étant agencé de sorte que la force d'inertie primaire produite par la rotation de l'arbre de vilebrequin (18b) englobe la composante de rotation, ayant une valeur constante et étant en rotation, et la composante de translation, à direction fixe et ayant une valeur variable en fonction de la rotation de l'arbre de vilebrequin (18b) ;
l'unité de moteur étant configurée de sorte que l'accélération entraînée par un couple de forces, le couple de forces étant un couple dans lequel la composante de rotation de la force d'inertie primaire produite par la rotation de l'arbre de vilebrequin (18b) équilibre la force d'inertie produite par la rotation de l'arbre d'équilibrage (27a), et l'accélération entraînée par la composante de translation de la force d'inertie primaire de l'arbre de vilebrequin (18b) sont pratiquement opposées l'une à l'autre dans leur direction, et ont une valeur pratiquement identique au niveau de la partie de l'unité de moteur (8) qui est supportée sur le châssis de carrosserie (2).
